# EUROPÄISCHE PATENTSCHRIFT

(11) **EP 4 640 986 B1**
(45) Veröffentlichungstag und Bekanntmachung des Hinweises auf die Patenterteilung: **25.11.2026**
(21) Anmeldenummer: 24222707.2
(22) Anmeldetag: 23.12.2024
(51) Int. Cl.: E06B 7/02, F24F 7/013, F24F 13/18, F24F 7/00, E06B 7/10

(54) **BAUANORDNUNG UND FASSADENELEMENT**
BUILDING ARRANGEMENT AND FACADE ELEMENT
AGENCEMENT STRUCTUREL ET ÉLÉMENT DE FACADE

(30) Priorität: 22.04.2024 DE 102024111207
(43) Veröffentlichungstag der Anmeldung: 29.10.2025
(73) Patentinhaber: Luftunion GmbH, 83083 Riedering (DE)
(72) Erfinder: MOSER, Michael, 83083 Riedering (DE); MOSER, Marcus, 83083 Riedering (DE)
(74) Vertreter: Bockhorni & Brüntjen Partnerschaft Patentanwälte mbB

(56) Entgegenhaltungen:
- DE-A1- 19 638 535
- DE-A1- 3 006 318
- DE-U1- 202022 100 099

## Beschreibung

### GEBIET DER ERFINDUNG

Die Erfindung betrifft eine Bauanordnung mit einem dezentralen Lüftungssystem und mit einer zumindest ein Fenster oder eine Tür aufweisenden Gebäudewand. Des Weiteren betrifft die Erfindung ein Fassadenelement zum Einsatz bei einer Sanierung eines Altbaus oder auch im Neubau innerhalb der Außenwand mit einem dezentralen Lüftungssystem.

### STAND DER TECHNIK

Um die Energieeffizienz von Gebäuden zu erhöhen, werden Neubauten und sanierte Altbauten mit einer starken Wärmedämmung ausgestattet. Dies macht den Einsatz von Lüftungssystemen notwendig, welche für einen Luftaustausch zwischen einer Außenumgebung und einem Innenraum des Gebäudes sorgen.

Zentrale Lüftungssysteme gibt es in einer Vielzahl von technischen Varianten. Sie sind flexibel konzipierbar in Bezug auf die Reduzierung der Schallimission von außen durch die Leitungsführung, und erlauben auch den Einsatz von Schalldämpfern in der Nähe des Lüfters bzw. der Lüfter. Es besteht die Möglichkeit, Bypässe zu realisieren, welche eine Wärmerückgewinnung überbrücken und eine klassische Lüftung im Sinne eines Außenluftdurchlasses ermöglichen. Ein Bypass bietet z.B. Möglichkeiten zur Temperaturregulierung im Sommer, so dass nachts bei kalten Temperaturen die kalte Außenluft mit hoher Luftwechselrate zur Abkühlung des Gebäudes benutzt werden kann. Ein Nachteil zentraler Lüftungssysteme ist, dass die Anlagentechnik aufwendig und die zentralisierte Verrohrung platz- und kostenintensiv ist.

Eine Alternative zu zentralen Lüftungssystemen bieten dezentrale Lüftungssysteme. Dezentrale Lüftungssysteme haben auf den ersten Blick Nachteile gegenüber zentralen Systemen, und zwar im Hinblick auf deren technische Erweiterungsmöglichkeiten. Dezentrale Lüftungssysteme sind sowohl im Neubau als auch in der Sanierung von Altbauten aufwendig, da jedes Lüftungsgerät eine eigene Außenwanddurchführung benötigt. Im Allgemeinen sind daher und auch wegen der begrenzten Bautiefe in der Wand bei dezentralen Lüftungssystemen bisher nur begrenzt Bypassfunktionen möglich. Im Vergleich zu zentralen Lüftungssystemen sind dezentrale Lüftungssysteme aber anlagentechnisch weniger aufwendig, verhältnismäßig günstig und platzsparend.

Der klassische Einbau eines dezentralen Lüftungssystems benötigt in der Regel eine Rohrdurchführung in Form einer Kernbohrung durch die Gebäudewand oder vorgefertigte Einbauelemente. Diese Einbauelemente werden hauptsächlich im Neubau verwendet und beinhalten die Rohrdurchführung. Die Rohrdurchführung verläuft dabei senkrecht zur Wandebene.

In die Rohrdurchführung wird ein Lüfter mit Elektromotor zur Regulierung der Lüftung eingesetzt, welcher die Lüftung reguliert, beziehungsweise einstellt.

Das System umfasst einen Wärmerückgewinnungsbaustein, wobei der Wärmerückgewinnungsbaustein die Wärme der Abluft aufnehmen kann. Bei sogenannten Pendellüftern wechselt der Lüftungsmotor, im Allgemeinen in einem festen Takt, die Dreh- und damit die Lüftungsrichtung. Eine Wärmemenge der Abluft wird in dem Wärmerückgewinnungsbaustein gespeichert und an die Zuluft wieder abgegeben.

Der Lüfter in dem beschriebenen System weist typischerweise einen Durchmesser von 10 cm bis 20 cm auf. Bei zu kleinen Durchmessern kommt es zu hohen Strömungsgeschwindigkeiten, was einen nicht akzeptablen Geräuschpegel des Lüfters mit sich bringen würde. Der selbst erzeugte Schall des Lüfters ist nur schwer zu reduzieren, da der Lüfter im Allgemeinen direkt vor der Innenwandebene sitzt. Zu große Durchmesser des Lüfters sind nicht akzeptabel, da eine Wanddurchführung in Form einer Kernbohrung stets eine Schwachstelle bezüglich Schallimission von außen in die Fassade und eine Kälte-/ Wärmebrücke für das Gebäude darstellt.

Die Einbausituation eines dezentralen Lüftungssystems nach dem Stand der Technik hat also trotz ihrer Kompaktheit Nachteile, da weitere technische Einbauten wie auch Konzepte zur Reduzierung der Schallimission aufgrund der fixierten, durch die Wandtiefe definierten Länge keinen Platz haben.

US 6 532 952 B1 offenbart ein Solarmodul mit integriertem Lüftungssystem, wobei der Lüfter mit seiner Strömungsrichtung in der Ebene des Solarmoduls verbaut ist

US 11 466 872 B2 zeigt einen modularen Baustein einer Klimaanlage zur Montage in einen Raum zwischen einer Außenverkleidung eines Gebäudes und zwei vertikalen Wandpfosten. Der Lüfter ist als Zentrifugalgebläse ausgeführt, wobei die Luft senkrecht zur Drehachse des Zentrifugalgebläses bei einem Gitter angesaugt und bei einem Auslass ausgeblasen wird.

US 3 308 634 A offenbart einen modularen Baustein einer Klimaanlage, und zwar zur Montage in einer Gehäusewand. Die nachträgliche Integration des Systems bei der Sanierung eines Altbaus erfordert einen Wanddurchbruch. Dabei wird ein Radiallüfter eingesetzt, um einen Luftstrom parallel zur Gebäudewand zu erzeugen.

EP 1 577 618 B1 offenbart eine in einer Kernbohrung einer Gebäudemauer integrierte Lüftungseinheit, die zum Teil in der Fassadendämmung neben oder oberhalb einer Fensteröffnung, insbesondere in einem integrierten Rollladenkasten montiert ist.

EP 1 837 610 A2 offenbart eine Raumlüftungsvorrichtung, die in einer thermischen Gebäudehülle integriert ist. Das System mit einem in der Ebene der Gebäudewand strömenden Lüfter ist gebäudeinnenseitig hinter einer Servicetür verbaut. Die Raumlüftungsvorrichtung ist in einer Gehäusewanne mit einer Wärmedämmung integriert.

EP 3 372 908 A1 offenbart eine multifunktionale Wärmedämmeinheit für Tür- oder Fensteröffnungen zum Einsatz beim Bau oder bei der Renovierung von Gebäuden, wobei neben einer Tür oder einem Fenster ein kastenförmiger Behälter vorgesehen ist, der zwei Ventilatoren aufnimmt, um zusammen mit einer Wärmerückgewinnungseinheit eine Wärmeaustauscheinheit zu bilden. Zur Integration des Systems in eine Gebäudeeinheit muss eine verbreiterte Fenster- oder Türenöffnung in Kauf genommen werden.

EP 3 974 741 A1 offenbart ist in einer äußeren Isolierverkleidung eines Gebäudes ein kastenartiges Gehäuse vorgesehen, und zwar in der Laibungsaufdopplung eines Fensters. Eine Kassette ist in das Gehäuse einsetzbar, sodass das System von außen wartbar ist. In der Kassette sind zwei Lüfter vorgesehen, die jeweils vor und nach einem Wärmetauscher angeordnet sind. Das System erfordert eine Kernbohrung.

EP 4 008 977 A1 zeigt eine Lüftungseinheit für einen 3-schaligen Klinker-Neubau. Zwei Lüfter verursachen eine Luftströmungsrichtung in der Ebene der Gebäudewand. Um Wartung und Reparaturen einfach durchführen zu können, wird beschrieben, dass ein Filterwechsel über eine Öffnung erfolgen kann, und zwar mittels eines herausnehmbaren Moduls. Das Gehäuse ist zwischen der Außenschale und der Innenschale der Wand verborgen positioniert, wobei sich eine Seite zur Laibung einer Öffnung der Wand öffnet. Das System erfordert eine erweiterte Aussparung in der Innenwand, da ein Teil der Wärmedämmung in den Bereich der Innenwand versetzt ist.

WO 2013/171676 A2 offenbart ein Lüftungsgerät zum Andocken an einen Rahmen eines Fensters oder einer Tür mit Lüftern, die jeweils eine Strömungsrichtung parallel zur Gebäudewand aufweisen. Das System ist revisionsfähig und verwendet die Laibung eines Fensters als Einbauort. Die Gebäudewand wird dabei durchbrochen.

DE 20 2022 100 099 U1, welche dem Oberbegriff des Anspruchs 1 zugrunde liegt, offenbart eine Lüftungseinrichtung für ein Gebäude mit einem Lüftungskanal, der eine erste und eine zweite Lüftungsöffnung miteinander verbindet, wobei der Lüftungskanal eine Anzahl von Abschnitten aufweist, die nacheinander durchströmt werden, wobei die Abschnitte jeweils einen Wärmespeicher aufweisen, der als Kombination eines Phasenumwandlungsmaterials und eines Wärmetauschers ausgebildet ist. Der Innenanschluss befindet sich in der Laibung eines Fensters.

DE 3006318 A1 betrifft eine Lüftungsvorrichtung zum Be- und Entlüften von Räumen mit einem kastenförmigen länglichen Gehäuse, in dem in zwei verschiedenen Strömungswegen jeweils ein Radiallüfter verbaut ist, welche die Zuluft und die Abluft über einen Wärmetauscher führen. Die Strömungsrichtung der Lüfter verläuft parallel zur Gebäudewand. Es wird beschrieben, dass die Einheit neben oder in einem Fenster eingebaut werden kann, auch nachträglich an der Oberkante eines Fensters.

DE 19 638 535 A1 zeigt eine Be- und Entlüftungsanlage mit Wärmerückgewinnung in einem länglichen Gehäuse, wobei zwei Radialventilatoren wechselweise betrieben werden, um den Belüftungsstrom und den Entlüftungsstrom hindurch zu fördern. Die Strömungsrichtung der Ventilatoren verläuft auch hier parallel zur Gebäudewand.

### AUFGABE DER ERFINDUNG

Es ist eine Aufgabe der Erfindung, die oben beschriebenen Nachteile des Stands der Technik zu überwinden und eine Baueinheit mit einem dezentralen Lüftungssystem zu schaffen, welches kostengünstig eine Reduzierung der Schallimission von außen und durch den Lüfter selbst ermöglicht.

Es ist eine weitere Aufgabe der Erfindung, ein Fassadenelement mit einem integrierten Lüftungssystem bereitzustellen, welches werkseitig mit einem hohen Vorfertigungsgrad bereitgestellt werden kann und verbesserte Eigenschaften in Bezug auf die Schallimission von außen und durch den Lüfter selbst aufweist.

Es ist eine noch weitere Aufgabe der Erfindung, eine Bauanordnung bereitzustellen, welche ein dezentrales Lüftungssystem, bevorzugt mit einer Außenrolladenbaugruppe, für ein Fenster oder eine Tür integriert.

### OFFENBARUNG DER ERFINDUNG

Die Aufgabe wird gelöst durch ein Fassadenelement und eine Bauanordnung mit den Merkmalen der unabhängigen Ansprüche. Bevorzugte Ausführungsformen der Erfindung sind in den abhängigen Ansprüchen definiert.

Eine erfindungsgemäße Bauanordnung mit einem dezentralen Lüftungssystem und mit einer zumindest ein Fenster oder eine Tür aufweisenden Gebäudewand umfasst zumindest einen Luftkanal und einen in dem Luftkanal einsetzbaren Lüfter. Der Luftkanal umfasst zumindest einen Zuluft-/Abluftabschnitt mit einem Anschlussbereich an eine Außenumgebung des Gebäudes. An den Zuluft-/Abluftabschnitt schließt sich ein den Lüfter aufnehmender Abschnitt an. An den den Lüfter aufnehmenden Abschnitt schließt sich ein Abschnitt mit einem Anschlussbereich an einen Innenraum des Gebäudes an.

Erfindungsgemäß ist der Lüfter derart in der Gebäudewand anordenbar, dass eine Strömungsrichtung des Luftstroms durch den Lüfter im Wesentlichen parallel zu einer Ebene der Gebäudewand verläuft. Beispielsweise ist der Lüfter im Wesentlichen horizontal oder im Wesentlichen vertikal in der Gebäudewand anordenbar, so dass eine Strömungsrichtung des Luftstroms durch den Lüfter im Wesentlichen parallel zu einer Ebene der Gebäudewand verläuft.

Im Sinne der vorliegenden Erfindung wird es als wesentlich angesehen, dass die Strömungsrichtung des Luftstroms durch den Lüfter also nicht senkrecht zur Gebäudewand verläuft, sondern einen nicht unerheblichen Winkel zu der Normalen der Gebäudewand einschließt, bevorzugt größer als 45°, weiter bevorzugt größer als 60°, noch weiter bevorzugt größer als 70°, noch weiter bevorzugt größer als 80° und insbesondere bevorzugt in etwa 90°.

Während also bei vielen dezentralen Lüftungssystemen gemäß dem Stand der Technik die Strömungsrichtung des Luftstroms durch den Lüfter im Wesentlichen senkrecht zu der Ebene der Gebäudewand verläuft, da der Lüfter in einem Wanddurchbruch, im Falle einer Sanierung z.B. eine Kernbohrung in der Gebäudewand im Wesentlichen senkrecht zur Ebene der Gebäudewand verbaut ist, sind bei der erfindungsgemäßen Anordnung eine Vielzahl von technisch sinnvollen Konstruktionen der Kanal- und Luftstromführung innerhalb der Wandebene möglich. Der Platzbedarf des Lüftungssystems ist dabei nicht auf die Wanddicke begrenzt.

Mit den Maßnahmen der Erfindung wird eine energieeffiziente, geräuscharme und zugleich optisch ansprechende Lösung bereitgestellt. Der einfache Aufbau des Systems kommt ohne bauliche Veränderungen an der Kernwand, Wanddurchführungen oder dgl. aus. Das Lüftungssystem ist geeignet für eine Vielzahl von Gebäudetypen, z.B. Bürogebäude, Wohngebäude und kommerzielle Einrichtungen.

Das dezentrale Lüftungssystem kann als ein System mit reversierenden Lüftungsgeräten (sog. "push and pull"), oder als ein System mit einem Kreuzstromwärmetauscher, also mit getrenntem Zu- und Abluftstrom ausgebildet sein.

Unter "im Wesentlichen horizontal" beziehungsweise "im Wesentlichen vertikal" wird im hier und im Folgenden somit auch ein nicht vollständig horizontaler beziehungsweise vertikaler Verbau des Lüfters in der Gebäudewand verstanden. Im weitesten Sinne kann der Lüfter also einen Winkel von bis zu 45°, bevorzugt bis zu 30°, weiter bevorzugt bis zu 20°, und noch weiter bevorzugt bis zu 10°, im Idealfall von 0° mit der Ebene der Gebäudewand, einschließen.

Die Begriffe "horizontal" und "vertikal" beziehen sich im Sinne der vorliegenden Offenbarung auf den gewöhnlichen Gebäudebau. Im Allgemeinen wird unter der vertikalen Richtung dabei eine lotrechte Richtung verstanden, das heißt in Richtung der Höhe des Gebäudes.

Der Lüfter ist dabei bevorzugt als ein Axiallüfter ausgeführt. Anstelle des Begriffs "Lüfter" kann im Rahmen der vorliegenden Offenbarung auch der Begriff "Ventilator" verwendet werden. Beim Axiallüfter verläuft die Drehachse des Laufrads parallel zum Luftstrom. Sofern die Einbausituation es ermöglicht, können aber auch andere Arten von Lüftern beziehungsweise Ventilatoren wie Diagonallüfter oder Radial-/Zentrifugallüfter oder auch Tangential- oder Querstromlüfter eingesetzt werden. Der Lüfter weist dabei bevorzugt einen Durchmesser von 10 cm bis 20 cm auf.

Das System kann einen oder mehrere der beschriebenen Lüfter umfassen.

Die Gebäudewand muss nicht vollständig eben, das heißt plan, ausgeführt sein, sondern kann auch Rundungen umfassen.

Nach einer bevorzugten Ausführungsform umfasst die Gebäudewand eine Außendämmung und der Lüfter ist, mittels der Wechselkassette, in der Ebene der Außendämmung anordenbar. Vorteilhaft wird damit eine eigene Außenwanddurchführung in Form einer Kernbohrung technisch unnötig, und es reduzieren sich drastisch die Kosten für die Installation des dezentralen Lüftungssystems.

Nach einer bevorzugten Ausführungsform der Erfindung ist vorgesehen, dass ein Anschluss des Luftkanals an die Außenumgebung des Gebäudes in einer Laibungsaufdoppelung des Fensters oder der Tür angeordnet ist. Der Anschluss des Luftkanals kann beispielsweise mittels einer Verblendung, beispielsweise aus Kunststoff oder Blech, z.B. in Form eines Lamellenaufsatzes, abgeschlossen sein.

Im Falle von Neubauten können beispielsweise beim klassischen Ziegelbau das dezentrale Lüftungssystem mit dem Anschluss des Luftkanals an die Außenumgebung in das Ziegelmauerwerk integriert werden. Im Falle von mehrschaligen Konstruktionen, zum Beispiel beim Kalksandstein/Beton mit Vollwärmeschutz, ist dies ebenfalls möglich.

Beim nachträglichen Sanieren eines Altbaus ermöglicht die Anordnung des Anschlusses in der Laibungsaufdoppelung des Fensters oder der Tür eine Montage des Systems sowohl gleichzeitig mit als auch unabhängig von der Montage des Vollwärmeschutzes, welche also auch Monate oder Jahre später erfolgen kann. Sobald der Vollwärmeschutz montiert ist, ist das Lüftungssystem vollständig integriert.

Erfindungsgemäß ist vorgesehen, dass ein Anschluss des Luftkanals an den Innenraum des Gebäudes in einer Stockaufdoppelung des Fensters oder der Tür angeordnet ist. Somit lässt sich das dezentrale Lüftungssystem vorteilhaft direkt an der Kernwand neben dem Fenster beziehungsweise der Tür montieren und löst damit das Problem, dass ein Fenster- beziehungsweise Türentausch eine mechanische Lüftung notwendig macht. Unter dem Tür- oder Fensterstock wird der Bereich um die Tür bzw. das Fenster herum verstanden.

Ein Wanddurchbruch, z.B. eine Kernbohrung in der Gebäudewand kann zusätzlich vorgenommen werden, um z.B. einen verlängerten Lüftungskanal bereitzustellen. Der Abschnitt mit dem Anschlussbereich an den Innenraum des Gebäudes ist bevorzugt zumindest abschnittsweise als ein Flachkanal ausgeführt. Hierdurch kann vorteilhaft eine weitere Volumenreduktion des Systems erreicht werden.

Erfindungsgemäß ist der Lüfter mittels einer Wechselkassette in den Luftkanal einsetzbar. Dabei ist bevorzugt vorgesehen, dass die Wechselkassette eine Revisionsklappe oder -tür aufweist, welche in der Laibungsaufdoppelung sitzt und von der Außenumgebung des Gebäudes aus zugänglich ist. Mittels der Wechselkassette wird eine Wartung oder ein Austausch der wesentlichen Elemente wie der Motor des Lüfters, Filter und etwaige Klappen ermöglicht, ohne den Wohnkomfort zu beeinträchtigen. Die Wechselkassette ist eine Vorrichtung in der Außenfassade, in der der Lüfter und weitere Lüftungsbauteile integriert sind. In der Wechselkassette sind daher bevorzugt sowohl der Lüfter als auch weitere Bauteile angeordnet, welche eine Wartung beziehungsweise von Zeit zu Zeit einen Austausch benötigen. Bevorzugt umfasst die Wechselkassette einen Wärmerückgewinnungsbaustein, falls dies in dem System vorgesehen ist. Weiterhin ist bevorzugt vorgesehen, dass die Wechselkassette auch einen Bypass mit einem weiteren Lüfter umfasst, falls dies in dem System vorgesehen ist.

Erfindungsgemäß weist das Lüftungssystem einen Einbaukörper auf, in welchem sämtliche Luftkanäle und Lüfter und die Wechselkassette verbaut bzw. verkapselt sind. Bevorzugt sind hier auch Wärmerückgewinnungsbausteine und ein Flachkanalbereich vorgesehen. Mit anderen Worten bildet der Einbaukörper ein Gehäuse für die Bauteile des Lüftungssystems. Der Einbaukörper ist erfindungsgemäß aus einem hoch wärmedämmenden Material gebildet, das das Volumen um die darin verbauten Bauteile vollständig ausfüllt. Hierdurch können Wärme-, bzw. Kältebrücken reduziert werden.

Als hoch wärmedämmend wird im Rahmen der vorliegenden Offenbarung ein Baustoff verstanden, der eine Wärmeleitfähigkeit λ von < 0,1 W/(m·K), bevorzugt < 0,05 W/(m·K) und noch weiter bevorzugt < 0,04 W/(m·K) aufweist.

Als Materialien eignen sich insbesondere Hartschäume z.B aus PUR, EPS, graues EPS, XPS, PE, Resol, oder dgl., oder Faserstoffe z.B. aus Mineralwolle, Naturwollen, Zellulose, und dgl. Für die Vakuumdämmung eignet sich z.B. eine Vakuumisolationspaneele (VIP). Die Wärmeleitfähigkeit λ wird dabei bestimmt gemäß DIN 4108-4:2013-02.

In einer Ausführungsform umfasst das Lüftungssystem einen Wärmerückgewinnungsbaustein. Der Wärmerückgewinnungsbaustein kann beispielsweise aus einer Keramik oder Aluminium oder Ähnlichem bestehen, wobei der Fachperson eine Vielzahl von Varianten bekannt sind. Beim Wärmerückgewinnungsbaustein kann es sich sowohl um einen Baustein zur rekuperativen Wärmerückgewinnung handeln, was bevorzugt ist, aber auch um einen Baustein zur regenerativen Wärmerückgewinnung, in Push and Pull Systemen einen Rekuperator oder einen Baustein mit Anschlüssen zu weiteren technischen Anlagen etwa Wärmepumpen. Bevorzugt ist ein Rohr- oder Plattenwärmetauscher. Der Wärmerückgewinnungsbaustein nutzt die Abwärme der verbrauchten Luft (Abluft) und erwärmt damit während der Heizperiode im Winter die frische Luft (Zuluft). In den Sommermonaten ist es möglich, den Wärmerückgewinnungsbaustein derart einzusetzen, um die kühlere Zuluft in der Nacht vorzutemperieren.

Der Lüfter kann dabei mittels einer geeigneten Steuerung als Pendellüfter betrieben werden, welcher in einem festen Takt oder nicht zwingend festen Takt die Drehrichtung wechselt und damit die Wärmemenge der Abluft, welche im Wärmerückgewinnungsbaustein gespeichert ist, an die Zuluft wieder abgibt.

Das System kann alternativ auch als ein Zweirohrsystem mit Kreuzstromwärmetauscher ausgebildet sein, was eine Wärmerückgewinnung ohne einen Wärmerückgewinnungsbaustein ermöglicht. Dabei umfasst das System zumindest zwei Lüfter, welche getrennt die Zu- und Abluft fördern, sowie optional einen Wärmerückgewinnungsbaustein.

In einer alternativen Ausführungsform weist das System keinen Wärmerückgewinnungsbaustein auf und bildet einen Außenluftdurchlass. An einem Fenster oder an einer Tür kann ein erstes Lüftungssystem mit einem Wärmerückgewinnungsbaustein ein weiteres Lüftungssystem ohne Wärmerückgewinnungsbaustein als Außenluftdurchlass vorgesehen sein. Beispielsweise ist das erste Lüftungssystem an einer Seite des Fensters bzw. der Tür vorgesehen und das weitere Lüftungssystem an einer anderen Seite.

In einer bevorzugten Ausführungsform weist der Luftkanal außerdem einen Bypass auf, in welchem bevorzugt ein weiterer Lüfter angeordnet ist, um einen Außenluftdurchlass bereitzustellen. Bevorzugt ist der Bypass mit einer Klappe oder ähnlichem steuerbar. Die Wärmerückgewinnung kann mittels des Bypasses überbrückt werden, was eine klassische Lüftung ermöglicht, in welcher verbrauchte und erwärmte Luft direkt nach draußen geleitet und durch kalte Luft ersetzt wird. Dies bietet die Möglichkeit zur Temperaturregulierung, insbesondere zur Klimatisierung, wenn nachts im Sommer bei kalten Temperaturen die kalte Außenluft mit hoher Luftwechselrate zur Abkühlung des Gebäudes benutzt wird.

Nach einem weiteren Aspekt der Erfindung wird ein Fassadenelement mit den Merkmalen von Anspruch 11 zum Einsatz im Neubau oder bei der Sanierung eines Altbaus mit zumindest einer eine Fenster- oder Türaussparung aufweisenden Dämmschicht vorgeschlagen, wobei das Fassadenelement eines der oben beschriebenen dezentralen Lüftungssysteme umfasst, welches in der Dämmschicht angeordnet ist. Vorteilhaft kann das Fassadenelement inklusive Lüftungssystem vollständig werkseitig vormontiert werden. Das Fassadenelement kann zum Beispiel eine Vorsatzschale für eine hinterlüftete vorgehängte Fassade sein oder zumindest einen Teil eines Wärmedämmverbundsystems bilden.

Das vorgefertigte Fassadenelement bietet besondere Vorteile im Hinblick auf das sogenannte serielle Sanieren, da ein geschlossenes System inklusive fertiger Wandabschnitte und Fenster sowie integriertem Lüftungssystem und gegebenenfalls mit Außenrolladen modular verbaut werden kann. Mit einer Vorortmontage der seriell vorgefertigten Fassadenelemente ist die Fassade vollständig fertiggestellt. Im Bauverlauf können im Anschluss an die Anbringung des Fassadenelements die alten Fenster von innen ausgebaut und damit die luftdichte Ebene geschlossen werden. Der Einbau und die Inbetriebnahme der Lüftung kann abgeschlossen werden, ohne dass damit ein Zeitaufwand verbunden ist. Somit ist es möglich, Wohnungen zu sanieren, ohne dass die Bewohner ihre Wohnung auf lange Zeit nicht benutzen können. Im Gegensatz zu bisherigen Systemen sind keine weiteren Arbeiten wie Kernbohrungen und dergleichen an der Kernwand notwendig.

Die Bauanordnung umfasst in einer vorteilhaften Ausführungsform eine Außenrolladenbaugruppe für das Fenster oder die Tür, welche einen Außenrolladen, eine Aufnahme für den Außenrolladen im aufgewickelten, zusammengelegten oder zusammengefalteten Zustand und ein Schienensystem zur Führung des Außenrolladens umfasst. Der Abschnitt des Luftkanals mit dem Anschlussbereich an den Innenraum des Gebäudes kann dabei vorteilhaft zumindest teilweise in der Aufnahme für den Außenrolladen im aufgewickelten, zusammengelegten oder zusammengefalteten Zustand angeordnet sein.

Da klassische Rolladenkästen mit anschließendem Fenster immer weniger verbaut werden, da sie eine Schwachstelle in Form einer Kältebrücke beziehungsweise Wärmebrücke in der homogenen Wandfläche darstellen, ist das Außenrolladensystem mit dem vorgeschlagenen Lüftungssystem vorteilhaft kombinierbar, da das Lüftungssystem direkt auf die thermisch getrennte Stockaufdoppelung aufgesetzt werden kann. Mit der Stockaufdoppelung entsteht ein Freiraum, da die Aufsatzrolläden nicht zwingend direkt auf dem Stock sitzen. Gerade bei Rolläden, welche auf einen Dorn aufgewickelt werden, was als vorteilhafte Ausführungsform von der Erfindung umfasst ist, besteht außerdem ein freier Bauraum insbesondere für die Kanalabschnitte des Lüftungssystems in der Aussparung zur Aufnahme des Außenrolladens, welche ein im Allgemeinen kubisches Volumen bildet.

Bevorzugt ist vorgesehen, dass das Schienensystem zur Führung des Außenrolladens zumindest einem verschiebbaren oder demontierbaren Abschnitt aufweist, welcher in zumindest eine Position verschiebbar bzw. schnell demontierbar ist, in der die Wechselkassette zugänglich ist.

### KURZE BESCHREIBUNG DER ZEICHNUNGEN

Die Erfindung wird im Folgenden anhand der Zeichnungen näher beschrieben. Die Zeichnungen stellen den Gegenstand der Erfindung lediglich schematisch dar.

Es zeigen:
- Fig. 1A: einen klassischen Einbau eines dezentralen Lüftungssystems nach dem Stand der Technik in eine Gebäudewand in Frontansicht,
- Fig. 1B: eine seitliche Schnittansicht von Fig. 1A,
- Fig. 2A: eine Frontansicht einer Gebäudewand mit einem dezentralen Lüftungssystem nach einer Ausführungsform der Erfindung,
- Fig. 2B: eine seitliche Schnittansicht von Fig. 2A und
- Fig. 3: eine Frontansicht einer Gebäudewand mit einem dezentralen Lüftungssystem nach einer weiteren Ausführungsform der Erfindung.

### AUSFÜHRUNGSFORMEN DER ERFINDUNG

Im Folgenden werden gleiche und gleichwirkende Bauelemente mit gleichen Bezugszeichen versehen. Eine wiederholte Beschreibung gleicher Bauteile erfolgt dabei nicht.

In den Figuren bezeichnet A stets die Außenumgebung des Gebäudes und B den Innenraum des Gebäudes. In Bezug auf die Gebäudewand 1, 100 wird im Folgenden von einer Außenseite A und Innenseite B gesprochen.

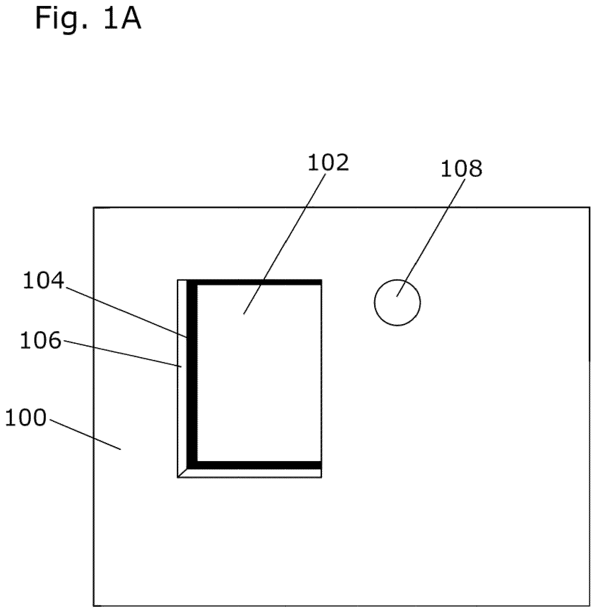

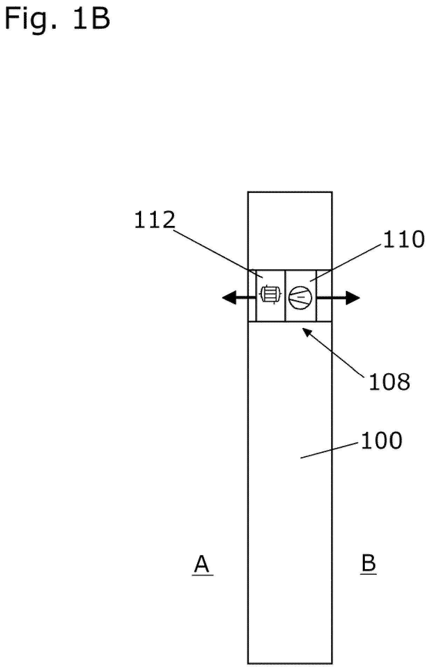

Fig. 1 zeigt eine Gebäudewand 100 in Frontansicht mit einem klassischen Einbau eines dezentralen Lüftungssystems gemäß dem Stand der Technik.

Die Gebäudewand 100 umfasst ein Fenster 102, welches in einer Fensterzarge 104 eingesetzt ist. Die Fensterzarge 104 ist an einer Laibung 106 des Fensters befestigt. Bei dem dezentralen Lüftungssystem gemäß dem Stand der Technik ist eine Kernbohrung 108 senkrecht zur Wandebene der Gebäudewand 100 vorgesehen.

Fig. 1B zeigt eine seitliche Schnittansicht durch den Bereich der Kernbohrung 108 der Gebäudewand 100. In der Kernbohrung 108 ist ein Lüfter 110 an einer Innenseite B der Gebäudewand 100 vorgesehen. Ein Wärmerückgewinnungsbaustein 112 ist an einer Außenseite A der Gebäudewand 100 vorgesehen. Der Lüfter 110 wird üblicherweise in einem Pendelmodus betrieben, wobei die Drehrichtung des Lüftungsmotors in einem festen Takt wechselt, sodass die Lüftungsrichtung wechselt. Die Wärme der Abluft, die in dem Wärmerückgewinnungsbaustein 112 gespeichert ist, wird dabei wieder an die Zuluft abgegeben.

Das Lüftungssystem nach dem Stand der Technik ist senkrecht zur Wandebene in der Gebäudewand 100 verbaut, d.h. der Lüfter 110 ist horizontal in der Gebäudewand 100 angeordnet und die Strömungsrichtung der Luft durch den Lüfter 110 ist parallel zu der Normalen der Wandebene. Die Einbautiefe des Lüftungssystems ist daher durch die Wanddicke bestimmt. Die Wanddicke liegt meist bei ca. 30 cm bis 50 cm. Der Lüfter 110 hat im Allgemeinen einen Durchmesser von 10 cm bis 20 cm. Nachteilig an der Situation ist, dass für die Schallimission ein direkter Durchgang von außen möglich ist, aber auch der vom Lüfter 110 selbst erzeugte Schall ist nachteilig, da der Lüfter 110 direkt in der Wandebene sitzt. Aufgrund der beschränkten Wanddicke sind wenige Konzepte zur Reduzierung der Schallimission in das Innere des Gebäudes möglich.

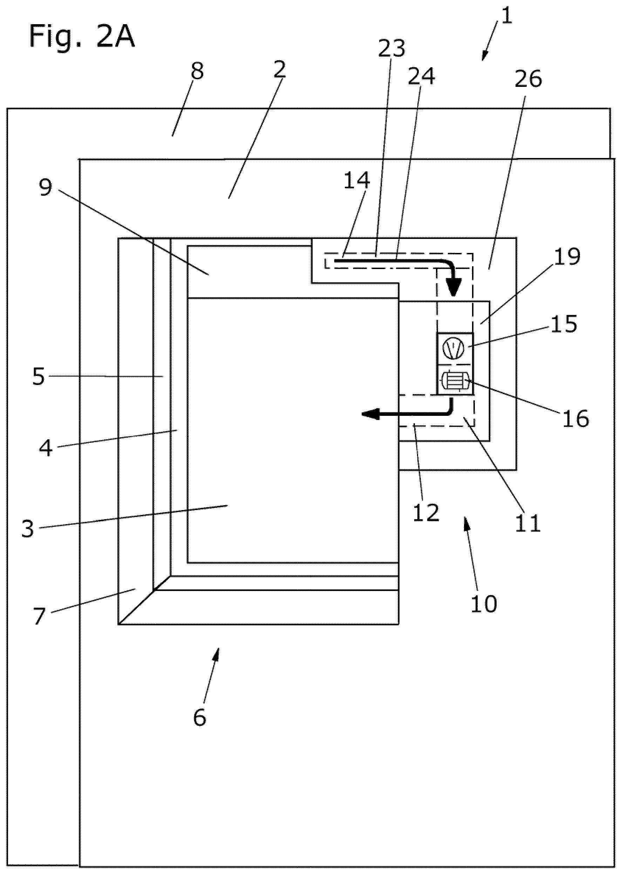

Fig. 2A zeigt eine erfindungsgemäße Bauanordnung mit einem dezentralen Lüftungssystem 10 mit hier beispielhaft einem Fenster 3 in einer Gebäudewand 1. Das Fenster 3 sitzt dabei in einer Fensterzarge 4 und die Fensterzarge 4 in einer Laibung 5. Die Situation ist analog auf einen Bereich mit einer Tür übertragbar.

Das dezentrale Lüftungssystem 10 weist einen Luftkanal 11 und einen in dem Luftkanal 11 mittels einer Wechselkassette 19 einsetzbaren Lüfter 15 auf, der in der dargestellten Ausführungsform beispielhaft, aber bevorzugt als ein Axialventilator ausgeführt ist.

Der Lüfter 15 ist im dargestellten Ausführungsbeispiel vertikal in der Gebäudewand 1 angeordnet, wobei ein Luftstrom 24 durch den Lüfter 15 innerhalb der Gebäudewand 1 und eine Strömungsrichtung des Luftstroms 24 durch den Lüfter 15 im Wesentlichen parallel zu einer Ebene der Gebäudewand 1 verläuft. In einer alternativen Ausführungsform (nicht dargestellt) kann der Lüfter 15 auch horizontal in der Gebäudewand angeordnet sein. Auch dabei ist die Strömungsrichtung des Luftstroms 24 durch den Lüfter 15 im Wesentlichen parallel zu der Ebene der Gebäudewand 1.

Das Lüftungssystem 10 ist in einem Einbaukörper 26 verkapselt. Der Einbaukörper 26 besteht selbst aus einem hoch wärmedämmenden Material und bildet ein Gehäuse für die Bauteile des Lüftungssystems 10.

Das Lüftungssystem 10 ist hier beispielhaft, aber bevorzugt als ein Teil einer Außendämmung 2 realisiert und kann nach einer Ausführungsform als ein Fassadenelement modular mit der Außendämmung 2 werkseitig vorgefertigt bereitgestellt werden. Hierzu ist der Einbaukörper 26 werkseitig in einer Dämmschicht der Außendämmung 2 eingesetzt. Das vorgefertigte Fassadenelement weist werkseitig eine Fensteraussparung 6 auf, welche individuell an die Bemaßungen des Fensters 3 angepasst ist. Optional kann das Fassadenelement werksseitig mit einer Verkleidung vorgefertigt werden. Bei einer Sanierung eines Altbaus wird das Fassadenelement mit der Fensteraussparung 6 passend vor die Kernwand 8 mit dem Fenster 3 gesetzt.

Alternativ ist es bei einer Sanierung eines Altbaus möglich, dass zunächst das Lüftungssystem 10 mit dem Einbaukörper 26 an der Gebäudewand 1 befestigt wird, wodurch die Gebäudewand 1 im Bereich eines Teils der Laibung 5 aufgedoppelt wird. Nachträglich, auch Wochen oder Monate später, kann die Außendämmung 2 um den Einbaukörper 26 herum angebracht werden.

Noch weiter alternativ kann Fig. 2A auch einen Bauzustand beim Neubau eines Gebäudes darstellen, wobei die Gebäudewand 1 zusammen mit der Außendämmung 2 und dem Einbaukörper 26 hergestellt wird.

Im Bereich der Laibung 5 entsteht in den beschriebenen drei Varianten jeweils eine Laibungsaufdoppelung 7, so dass das Fenster 3 gegenüber der Außenverkleidung relativ weit zurückversetzt ist.

Oberhalb des Fensters 3 ist eine Stockaufdoppelung 9 vorgesehen, welche beispielsweise als Aufnahme für einen Außenrolladen (nicht dargestellt) dienen kann. Ein Teil der Kanalführung, welche mit Bezug zu den weiteren Figuren beschrieben wird, kann dabei im Bauraum für den Außenrolladen vorgesehen sein, insbesondere der Anschluss des Luftkanals 11 an den Innenraum des Gebäudes.

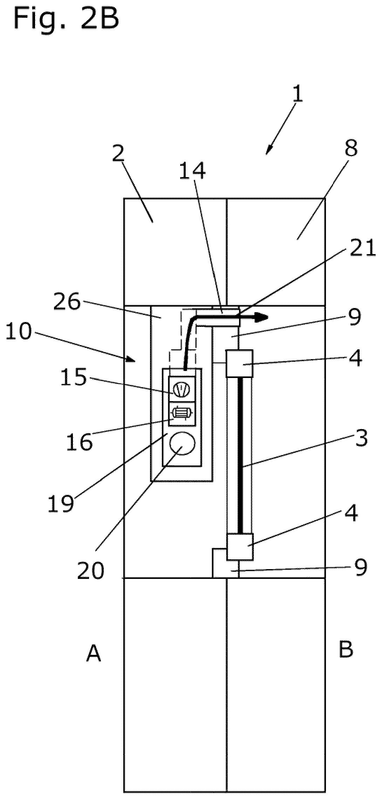

Der im Lüftungssystem 10 vorgesehene Luftkanal 11 umfasst einen Zuluft-/Abluftabschnitt 12 mit einem Anschluss 20 an die Außenseite A. Wie in Fig. 2B dargestellt, ist der Anschluss 20 beispielsweise als ein Rundkanal ausgeführt und befindet sich in der Laibungsaufdoppelung 7 des Fensters 3. Der Anschluss außen 20 ist mittels einer geeigneten Abdeckung oder Verblendung, z.B. in Form eines Lamellenaufsatzes verborgen.

Das Lüftungssystem 10 umfasst weiterhin einen den Lüfter aufnehmenden Abschnitt, in welchem sich der Lüfter 15 und in der dargestellten Ausführungsform ein Wärmerückgewinnungsbaustein 16 befinden.

Der den Lüfter 15 aufnehmende Abschnitt und, nicht einschränkend für die Erfindung, aber bevorzugt auch der Zuluft-/Abluftabschnitt 12, sind in einer Wechselkassette 19 verbaut. Die Wechselkassette 19 ist auf einem Schiebesystem in Richtung der Fensteraussparung 6 seitlich herausziehbar angeordnet und mit einer Revisionsklappe oder -tür versehen. Wie in Fig. 2B ersichtlich, ist die Wechselkassette 19 damit von der Außenseite A des Gebäudes aus zugänglich.

Der Luftkanal 11 umfasst einen weiteren Abschnitt 14 mit einem Anschlussbereich an die Innenseite B. Wie in Fig. 2B ersichtlich, ist der Abschnitt 14 durch die Stockaufdoppelung 9 des Fensters 3 hindurchgeführt. Somit ist keine Kernbohrung durch die Kernwand 8 notwendig, was einen erheblichen Arbeitsaufwand erspart. Der Anschluss 21 an den Innenraum kann wie üblich mit einer Abdeckung oder Verblendung, beispielsweise in Form eines Lamellenaufsatzes, abgedeckt sein.

Im Abschnitt 14 kann die Verrohrung im Wesentlichen mittels Flachkanälen 23 erfolgen, wodurch erheblicher Bauraum gespart werden kann.

Für den Fall, dass ein Außenrolladen vorgesehen ist, ist die Führungsschiene des Außenrolladens bevorzugt verschiebbar oder demontierbar ausgebildet, so dass die Tür oder Klappe zum Zugang zur Wechselkassette 19 zugänglich ist.

Man kann erkennen, dass keine Lüftungsverrohrung in der Kernwand 8 benötigt wird. Die Luft wird von außen über die Laibungsaufdoppelung 7 durch die Wechselkassette 19 und durch die Stockaufdoppelung 9 zum Innenraum geführt, und umgekehrt. Der Lüfter 15 kann im Pendelmodus betrieben werden.

Durch die nicht direkt durch die Gebäudewand 1 verlaufende Kanalführung wird im Vergleich zur klassischen Kanalführung (Fig. 1A, 1B) eine starke Reduzierung der Schallimission von außen erreicht. Die Wartung der wesentlichen Elemente wie Motor, Wärmerückgewinnungsbaustein 16, Filter und etwaige Klappen ist über die Wechselkassette 19 leicht möglich.

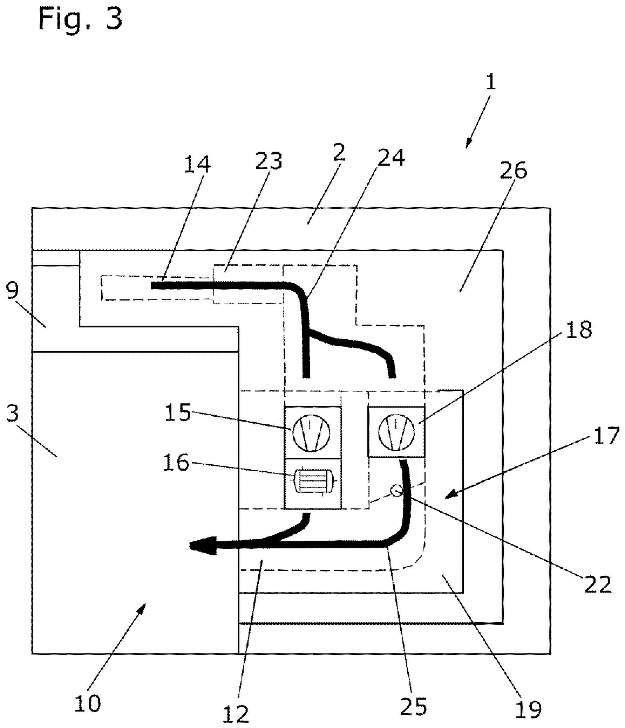

Fig. 3 zeigt eine weitere Ausführungsform eines Lüftungssystems 10 nach der vorliegenden Erfindung.

Der wesentliche Aufbau des Lüftungssystems 10 ist wie in Fig. 2A und 2B. Allerdings umfasst das System hier einen Bypass 17, in welchem ein weiterer Lüfter 18 angeordnet ist. Der Bypassluftstrom 25 umgeht den Lüfter 15 und den Wärmerückgewinnungsbaustein 16. Über den Bypass 17 ist somit ein Außenluftdurchlass realisiert, sodass eine Lüftung ohne Wärmerückgewinnung erfolgen kann. Der Bypass 17 ist mittels einer Bypasssteuerungsklappe 22 regelbar.

Der weitere Lüfter 18 im Bypass 17 ist, nicht einschränkend für die Erfindung aber bevorzugt, in der Wechselkassette 19 angeordnet.

Der Einsatz des Systems ist im Neubau und bei der Sanierung von Altbauten denkbar. Beide beschriebenen Ausführungsformen können insbesondere auch als vorgefertigtes Fassadenelement bereitgestellt werden.

### BEZUGSZEICHEN

1 Gebäudewand; 2 Außendämmung; 3 Fenster; 4 Fensterzarge; 5 Laibung; 6 Fensteraussparung; 7 Laibungsaufdoppelung; 8 Kernwand; 9 Stockaufdoppelung; 10 Lüftungssystem; 11 Luftkanal; 12 Zuluft-/Abluftabschnitt; 14 Abschnitt mit Anschlussbereich an Innenraum; 15 Lüfter; 16 Wärmerückgewinnungsbaustein; 17 Bypass; 18 weiterer Lüfter; 19 Wechselkassette; 20 Anschluss außen; 21 Anschluss innen; 22 Bypasssteuerungsklappe; 23 Flachkanal; 24 Luftstrom; 25 Bypassluftstrom; 100 Gebäudewand; 102 Fenster; 104 Fensterzarge; 106 Laibung; 108 Kernbohrung; 110 Lüfter; 112 Wärmerückgewinnungsbaustein; A Außenseite; B Innenseite.

## Patentansprüche

1. Bauanordnung mit einem dezentralen Lüftungssystem (10) und mit einer zumindest ein Fenster (3) oder eine Tür aufweisenden Gebäudewand (1),
wobei das Lüftungssystem (10) zumindest einen Luftkanal (11) und einen in dem Luftkanal (11) einsetzbaren Lüfter (15), insbesondere Axialventilator, umfasst,
wobei der Luftkanal (11) zumindest einen Zuluft-/Abluftabschnitt (12) mit einem Anschlussbereich an eine Außenumgebung des Gebäudes einen den Lüfter (15) aufnehmenden Abschnitt und einen Abschnitt (14) mit einem Anschlussbereich an einen Innenraum des Gebäudes aufweist,
wobei der Lüfter (15) derart in der Gebäudewand (1) angeordnet ist, dass eine Strömungsrichtung des Luftstroms (24) durch den Lüfter (15) im Wesentlichen parallel zu einer Ebene der Gebäudewand (1) verläuft,
**dadurch gekennzeichnet, dass** ein Anschluss (21) des Luftkanals (11) an den Innenraum des Gebäudes in einer Stockaufdoppelung (9) des Fensters (3) oder der Tür angeordnet ist und der Luftkanal (11) und der Lüfter (15) in einem Einbaukörper (26) verbaut sind, welcher aus einem hoch wärmedämmenden Material besteht, das eine Wärmeleitfähigkeit λ von < 0,1 W/(m·K) aufweist, und dass der Lüfter (15) in einer Wechselkassette angeordnet ist.

2. Bauanordnung nach Anspruch 1, **dadurch gekennzeichnet, dass** die Gebäudewand (1) eine Außendämmung (2) umfasst und der Lüfter (15) in der Außendämmung (2) anordenbar ist.

3. Bauanordnung nach einem der vorhergehenden Ansprüche, **dadurch gekennzeichnet, dass** ein Anschluss (20) des Luftkanals (11) an die Außenumgebung des Gebäudes in einer Laibungsaufdoppelung (7) des Fensters (3) oder der Tür angeordnet ist.

4. Bauanordnung nach einem der vorhergehenden Ansprüche, **dadurch gekennzeichnet, dass** der Abschnitt (14) mit dem Anschlussbereich an den Innenraum des Gebäudes zumindest teilweise als ein Flachkanal (23) ausgeführt ist.

5. Bauanordnung nach einem der vorhergehenden Ansprüche, **dadurch gekennzeichnet, dass** die Wechselkassette (19) eine Revisionsklappe oder -tür aufweist, welche von der Außenumgebung des Gebäudes aus zugänglich ist.

6. Bauanordnung nach einem der vorhergehenden Ansprüche, **dadurch gekennzeichnet, dass** das Lüftungssystem (10) einen Wärmerückgewinnungsbaustein (16) aufweist.

7. Bauanordnung nach Anspruch 6, **dadurch gekennzeichnet, dass** der Luftkanal (11) einen Bypass (17), bevorzugt mit einem weiteren Lüfter (18), aufweist, der einen Außenluftdurchlass bereitstellt.

8. Bauanordnung nach einem der vorhergehenden Ansprüche, weiterhin umfassend eine Außenrolladenbaugruppe für das Fenster (3) oder die Tür, wobei die Außenrolladenbaugruppe einen Außenrolladen, eine Aufnahme für den Außenrolladen im aufgewickelten, zusammengelegten oder zusammengefalteten Zustand und ein Schienensystem zur Führung des Außenrolladens umfasst.

9. Bauanordnung nach Anspruch 8, **dadurch gekennzeichnet, dass** der Abschnitt (14) des Luftkanals (11) mit dem Anschlussbereich an den Innenraum des Gebäudes zumindest teilweise in der Aufnahme für den Außenrolladen im aufgewickelten, zusammengelegten oder zusammengefalteten Zustand angeordnet ist.

10. Bauanordnung nach Anspruch 8 oder 9, **dadurch gekennzeichnet, dass** das Schienensystem zumindest einen verschiebbaren oder demontierbaren Abschnitt aufweist, welcher in zumindest eine Position verschiebbar oder demontierbar ist, in welcher die Wechselkassette (19) zugänglich ist.

11. Fassadenelement zur Verwendung in einer Bauanordnung nach einem der vorhergehenden Ansprüche, zum Einsatz im Neubau oder bei einer Sanierung eines Altbaus, mit zumindest einer eine Fenster- oder Türaussparung (6) aufweisenden Dämmschicht, **dadurch gekennzeichnet, dass** das Fassadenelement ein dezentrales Lüftungssystem (10) für ein Gebäude mit zumindest ein Fenster (3) oder eine Tür aufweisenden Gebäudewand (1) umfasst, dass das Lüftungssystem (10) zumindest einen Luftkanal (11) und einen indem Luftkanal (11) einsetzbaren Lüfter (15) umfasst, dass der Luftkanal (11) zumindest einen Zuluft-/Abluftabschnitt (12) mit einem Anschlussbereich an eine Außenumgebung des Gebäudes, einen den Lüfter (15) aufnehmenden Abschnitt und einen Abschnitt (14) mit einem Anschlussbereich an einen Innenraum des Gebäudes aufweist, dass der Lüfter (15) derart in dem Fassadenelement angeordnet ist, dass eine Strömungsrichtung des Luftstroms (24) durch den Lüfter im Wesentlichen parallel zu einer Ebene des Fassadenelements verläuft, dass der Luftkanal (11) und der Lüfter (15) in einem Einbaukörper(26) verbaut sind, welcher aus einem hoch wärmedämmenden Material besteht, das eine Wärmeleitfähigkeit von < 0,1 W/(m·K) aufweist, und dass der Lüfter (15) in einer Wechselkassette angeordnet ist.

## Claims

1. A construction arrangement with a decentralized ventilation system (10) and a building wall (1) having at least one window (3) or one door,
wherein the ventilation system (10) comprises at least one air duct (11) and a fan (15), in particular an axial fan, that can be installed in the air duct (11),
wherein the air duct (11) comprises at least one supply/exhaust air section (12) with a connection area to the building's exterior, a section housing the fan (15), and a section (14) with a connection area to an interior space of the building,
wherein the fan (15) is arranged in the building wall (1) such that the direction of flow of the air stream (24) through the fan (15) runs substantially parallel to a plane of the building wall (1),
**characterized in that** a connection (21) of the air duct (11) to the interior of the building is located in a frame doubling (9) of the window (3) or the door, and the air duct (11) and the fan (15) are installed in a built-in unit (26) consisting of a highly thermally insulating material having a thermal conductivity λ of < 0.1 W/(m·K), and that the fan (15) is housed in a changeable cassette.

2. The construction arrangement according to claim 1, **characterized in that** the building wall (1) comprises exterior insulation (2) and the fan (15) can be installed in the exterior insulation (2).

3. The construction arrangement according to any of the preceding claims, **characterized in that** a connection (20) of the air duct (11) to the exterior environment of the building is arranged in a window (3) or door reveal doubling (7).

4. The construction arrangement according to any of the preceding claims, **characterized in that** the section (14) with the connection area to the interior of the building is at least partially designed as a flat duct (23).

5. The construction arrangement according to any of the preceding claims, **characterized in that** the changeable cassette (19) includes an inspection flap or inspection door that is accessible from the exterior of the building.

6. The construction arrangement according to any of the preceding claims, **characterized in that** the ventilation system (10) includes a heat recovery module (16).

7. The construction arrangement according to claim 6, **characterized in that** the air duct (11) comprises a bypass (17), preferably with an additional fan (18), which provides an outside air passage.

8. The construction arrangement according to any of the preceding claims, further comprising an exterior roller shutter assembly for the window (3) or door, wherein the exterior roller shutter assembly comprises an exterior roller shutter, a housing for the exterior roller shutter in the rolled-up, folded, or collapsed state, and a rail system for guiding the exterior roller shutter.

9. The construction arrangement according to claim 8, **characterized in that** the section (14) of the air duct (11) with the connection area to the interior of the building is at least partially located within the housing for the exterior roller shutter in the rolled-up, folded, or collapsed state.

10. The construction arrangement according to claim 8 or 9, **characterized in that** the rail system has at least one movable or removable section that can be moved or removed to at least one position in which the changeable cassette (19) is accessible.

11. A facade element for use in a construction arrangement according to any of the preceding claims, for use in new construction or in the renovation of an existing building, with at least one insulation layer having a window or door recess (6), **characterized in that** the facade element comprises a decentralized ventilation system (10) for a building having a building wall (1) with at least one window (3) or one door, that the ventilation system (10) comprises at least one air duct (11) and a fan (15) that can be installed in the air duct (11),
that the air duct (11) comprises at least one supply/exhaust air section (12) with a connection area to the building's exterior, a section housing the fan (15), and a section (14) with a connection area to an interior space of the building,
that the fan (15) is arranged in the facade element such that the direction of flow of the air stream (24) through the fan (15) runs substantially parallel to a plane of the facade element, that the air duct (11) and the fan (15) are installed in a built-in unit (26) consisting of a highly thermally insulating material having a thermal conductivity λ of < 0.1 W/(m·K), and that the fan (15) is housed in a changeable cassette.

## Revendications

1. Agencement constructif comprenant un système de ventilation décentralisé (10) et une paroi de bâtiment (1) présentant au moins une fenêtre (3) ou une porte, dans lequel le système de ventilation (10) comprend au moins un canal à air (11) et un ventilateur (15), en particulier un ventilateur axial, pouvant être inséré dans le canal à air (11),
dans lequel le canal à air (11) présente au moins une section d'arrivée/sortie d'air (12) avec une zone de raccordement à un environnement extérieur du bâtiment, une section recevant le ventilateur (15) et une section (14) avec une zone de raccordement à un espace intérieur du bâtiment,
dans lequel le ventilateur (15) est agencé dans la paroi de bâtiment (1) de telle sorte qu'une direction d'écoulement du flux d'air (24) à travers le ventilateur (15) s'étend sensiblement en parallèle à un plan de la paroi de bâtiment (1),
**caractérisé en ce qu'**un raccordement (21) du canal à air (11) à l'espace intérieur du bâtiment est agencé dans un doublage du dormant (9) de la fenêtre (3) ou de la porte, et le canal à air (11) et le ventilateur (15) sont intégrés dans un corps d'encastrement (26) qui se compose d'un matériau présentant une très forte isolation thermique et une conductivité thermique λ de < 0,1 W/(m·K), et **en ce que** le ventilateur (15) est agencé dans une cassette amovible.

2. Agencement constructif selon la revendication 1, **caractérisé en ce que** la paroi de bâtiment (1) comprend une isolation extérieure (2) et **en ce que** le ventilateur (15) peut être agencé dans l'isolation extérieure (2).

3. Agencement constructif selon l'une des revendications précédentes, **caractérisé en ce qu'**un raccordement (20) du canal à air (11) à l'environnement extérieur du bâtiment est agencé dans un doublage d'embrasure (7) de la fenêtre (3) ou de la porte.

4. Agencement constructif selon l'une des revendications précédentes, **caractérisé en ce que** la section (14) avec la zone de raccordement à l'espace intérieur du bâtiment est réalisée au moins en partie sous la forme d'un canal plat (23).

5. Agencement constructif selon l'une des revendications précédentes, **caractérisé en ce que** la cassette amovible (19) présente un clapet ou une porte de maintenance qui est accessible depuis l'environnement extérieur du bâtiment.

6. Agencement constructif selon l'une des revendications précédentes, **caractérisé en ce que** le système de ventilation (10) présente un module de récupération de chaleur (16).

7. Agencement constructif selon la revendication 6, **caractérisé en ce que** le canal à air (11) présente une dérivation (17), de préférence avec un autre ventilateur (18), qui fournit un passage d'air extérieur.

8. Agencement constructif selon l'une des revendications précédentes, comprenant en outre un ensemble de volet roulant extérieur pour la fenêtre (3) ou la porte, dans lequel l'ensemble de volet roulant extérieur comprend un volet roulant extérieur, un logement pour le volet roulant extérieur à l'état enroulé, rabattu ou plié, et un système de rails de guidage du volet roulant extérieur.

9. Agencement constructif selon la revendication 8, **caractérisé en ce que** la section (14) du canal à air (11) avec la zone de raccordement à l'espace intérieur du bâtiment est agencée au moins en partie dans le logement pour le volet roulant extérieur à l'état enroulé, rabattu ou plié.

10. Agencement constructif selon la revendication 8 ou 9, **caractérisé en ce que** le système de rails présente au moins une section déplaçable ou démontable pouvant être déplacée ou démontée dans au moins une position à laquelle la cassette amovible (19) est accessible.

11. Élément de façade destiné à être utilisé dans un agencement constructif selon l'une des revendications précédentes, pour un emploi dans une construction neuve ou lors d'une rénovation d'un bâtiment ancien, comprenant au moins une couche d'isolation présentant un évidement (6) de fenêtre ou de porte, **caractérisé en ce que** l'élément de façade présente un système de ventilation décentralisé (10) pour un bâtiment comprenant une paroi de bâtiment (1) présentant au moins une porte (3) et une fenêtre, **en ce que** le système de ventilation (10) comprend au moins un canal à air (11) et un ventilateur (15) pouvant être inséré dans le canal à air (11), **en ce que** le canal à air (11) présente au moins une section d'arrivée/sortie d'air (12) avec une zone de raccordement à un environnement extérieur du bâtiment, une section recevant le ventilateur (15) et une section (14) avec une zone de raccordement à un espace intérieur du bâtiment, **en ce que** le ventilateur (15) est agencé dans l'élément de façade de telle sorte qu'une direction d'écoulement du flux d'air (24) à travers le ventilateur (15) s'étend sensiblement en parallèle à un plan de l'élément de façade, **en ce que** le canal à air (11) et le ventilateur (15) sont intégrés dans un corps d'encastrement (26) qui se compose d'un matériau présentant une très forte isolation thermique et une conductivité thermique λ de < 0,1 W/(m·K), et **en ce que** le ventilateur (15) est agencé dans une cassette amovible.
